# EUROPEAN PATENT APPLICATION

(11) **EP 4 708 403 A1**
(43) Date of publication of application: **11.03.2026**
(21) Application number: 25195276.8
(22) Date of filing: 12.08.2025
(51) Int. Cl.: H01M 4/62, H01M 10/0567, H01M 10/0568, H01M 10/0569

(54) **SECONDARY BATTERY AND ELECTRONIC DEVICE**

(30) Priority: 14.08.2024 CN 202411116513
(71) Applicant: Ningde Amperex Technology Ltd., Ningde City, Fujian Province 352100 (CN)
(72) Inventor: WANG, Kefei, Ningde City, Fujian Province, China, 352100 (CN); ZHUANG, Ruirui, Ningde City, Fujian Province, China, 352100 (CN)
(74) Representative: Icosa

(57) **Abstract**

A secondary battery, including: a positive electrode, a negative electrode, and an electrolyte. The positive electrode includes a positive current collector and a positive active material layer formed on the positive current collector, the positive active material layer includes a positive active material and polyvinyl butyral, and the electrolyte includes lithium difluorophosphate and a trinitrile compound. A shedding resistance of the positive electrode is improved, an initial resistance of the secondary battery is further reduced, and a low-temperature rate characteristic is further improved.

## Description

### TECHNICAL FIELD

This application relates to the field of energy storage, and in particular, to a secondary battery and an electronic device.

### BACKGROUND

Secondary batteries have characteristics of small size, light weight, high energy density, and rechargeable capability, and have been widely used. A secondary battery typically includes battery components such as a positive electrode, a negative electrode, and a separator that isolates the positive electrode from the negative electrode. An electrode (e.g., the positive electrode or negative electrode) generally includes a current collector and an electrode composite material layer formed on the current collector. For example, a positive composite material layer is typically formed by applying and drying a positive electrode slurry on the current collector. The positive electrode slurry is formed by containing a positive active material, a conductive material for improving conductivity, and a binding material for binding the components in a dispersion medium. In addition, polyvinylidene difluoride (PVDF) or the like has conventionally been used as the binding material for forming the positive composite material layer. PVDF is prone to gelation, leading to a decrease in slurry stability and affecting the battery performance. Moreover, PVDF is a fluorine-containing binder, of which polymerization monomer VDF is prepared by dehydrochlorination of 1-chloro-1,1-difluoroethane (R142B). However, R142B is a high-risk environmental pollutant and does not meet the green and sustainable development requirements of the new energy industry. Developed countries such as the EU are gradually restricting its application in the lithium-ion batteries.

### SUMMARY

Embodiments of this application solve the problems in the prior art to some extent by adjusting the composition of a positive electrode and the composition in an electrolyte applied in a secondary battery. The applicants of this application discovered that a positive active material layer includes a positive active material and polyvinyl butyral, and an electrolyte includes lithium difluorophosphate and a trinitrile compound. A shedding resistance of a positive electrode is improved, an initial resistance of the secondary battery is further reduced, and a low-temperature rate characteristic is further improved, such that this application is completed.

In some embodiments, the polyvinyl butyral has at least one of the following:
(1) a particle shape, and an average particle size of 20 microns to 100 microns;
(2) a degree of acetalation of 30 mol% to 60 mol%; or
(3) an average molecular weight of 3×10⁴ to 20×10⁴.

In some embodiments, the positive active material layer further includes an auxiliary, and the auxiliary includes at least one of propylene glycol laurate, pentaerythritol oleate, polyethylene glycol oleate, polypropylene glycol oleate, polyoxyethylene glycerol, or polyoxypropylene glycerol.

In some embodiments, the trinitrile compound is at least one selected from 1,2,3-propanetricarbonitrile, 1,3,5-pentanetricarbonitrile, 1,2,6-hexanetricarbonitrile, 1,3,6-hexanetricarbonitrile, 1,2,4-tris(2-cyanoethoxy)butane, 1,2,3-tris(2-cyanoethoxy)propane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

In some embodiments, with respect to 100 parts by mass of the electrolyte, the lithium difluorophosphate is 0.01 parts by mass to 1.5 parts by mass, and/or the trinitrile compound is 0.5 parts by mass to 6 parts by mass.

In some embodiments, with respect to 100 parts by mass of the electrolyte, the lithium difluorophosphate is 0.01 parts by mass to 0.08 parts by mass, and/or the trinitrile compound is 0.5 parts by mass to 3.5 parts by mass.

In some embodiments, with respect to 100 parts by mass of the electrolyte, the lithium difluorophosphate is 0.11 parts by mass to 0.85 parts by mass, and/or the trinitrile compound is 1.7 parts by mass to 4.6 parts by mass.

In some embodiments, the electrolyte further includes other additive, and the other additive includes at least one of succinonitrile, adiponitrile, ethylene glycol bis(propionitrile) ether, lithium monofluorophosphate, 1,2-bis(difluorophosphoryl)ethane, 1,2-bis(difluorophosphoryl)propane, 1,2-bis(difluorophosphoryl)butane, vinylene carbonate, lithium fluorosulfonate, 1,3-propanesultone, or ethylene sulfate.

In some embodiments, with respect to 100 parts by mass of the electrolyte, the other additive is 0.1 parts by mass to 6 parts by mass.

According to another aspect of this application, this application provides an electronic device, including the secondary battery according to this application.

By employing a specific composition of the positive electrode and a specific combination of the electrolyte, this design of this application not only improves a shedding resistance of the positive electrode, but also reduces an initial resistance of the secondary battery and improves a low-temperature rate characteristic.

The additional aspects and advantages of the embodiments of this application may be partially described and shown in the subsequent description or illustrated by the implementation of the embodiments of this application.

### DETAILED DESCRIPTION

Embodiments of this application may be described in detail below. No embodiment of this application is to be construed as a limitation on this application.

Unless otherwise expressly specified, the following terms used in this application have the meanings defined below.

By employing a specific composition of the positive electrode and a specific combination of the electrolyte, this design of this application not only improves a shedding resistance of the positive electrode, but also reduces an initial resistance of the secondary battery and improves a low-temperature rate characteristic.

In one embodiment, this application provides a secondary battery, including a positive electrode, a negative electrode, and an electrolyte as described below.

### I. Positive Electrode

This application relates to a secondary battery and an electronic device. Specifically, this application provides a secondary battery, including: a positive electrode, a negative electrode, and an electrolyte. The positive electrode includes a positive current collector and a positive active material layer formed on the positive current collector, the positive active material layer includes a positive active material and polyvinyl butyral, and the electrolyte includes lithium difluorophosphate and a trinitrile compound. The shedding resistance of the positive electrode is improved, the initial resistance of the secondary battery is further reduced, and the low-temperature rate characteristic is further improved.

The positive electrode includes the positive current collector and the positive active material layer formed on the positive current collector.

The positive active material layer includes the positive active material, and one or more positive active material layers may be provided. The positive active material is any material capable of reversibly intercalating and de-intercalating lithium ions.

The applicants of this application unexpectedly discovered during experiments that adding polyvinyl butyral in the slurry mixing process of the positive electrode improves the stability of the slurry but reduces the adhesion of an electrode plate. The applicants further found that the adhesion of the electrode plate is significantly improved in an electrolyte system containing the lithium difluorophosphate and the trinitrile compound. It is speculated that the reason may be that the polyvinyl butyral is prone to swelling in a carbonate electrolyte system, while the lithium difluorophosphate and the trinitrile compound significantly inhibit the swelling, thereby enhancing the cohesion of the positive active material layer and bonding force with a current collector, such that the shedding resistance of the positive electrode is improved, the initial resistance of the secondary battery is further reduced, and the low-temperature rate characteristic is further improved.

Specifically, from the perspective of improving the shedding resistance of the positive electrode, the polyvinyl butyral has a particle shape, and an average particle size of the polyvinyl butyral is preferably 100 µm or less, more preferably 80 µm or less, further preferably 60 µm or less, particularly preferably 40 µm or less, preferably 20 µm or more, and more preferably 30 µm or more. When the average particle size of the polyvinyl butyral is within the aforementioned range, the shedding resistance of the positive electrode can be effectively improved. Furthermore, the cohesion of the positive active material layer and bonding force with the current collector can be generally improved.

Specifically, from the perspective of improving the shedding resistance of the positive electrode, a degree of acetalation of the polyvinyl butyral is 30 mol% to 60 mol%, preferably 60 mol% or less, more preferably 55 mol% or less, further preferably 50 mol% or less, particularly preferably 45 mol% or less, preferably 30 mol% or more, and more preferably 35 mol% or more. When the degree of acetalation of the polyvinyl butyral is within the aforementioned range, the shedding resistance of the positive electrode can be effectively improved. Furthermore, the cohesion of the positive active material layer and bonding force with the current collector can be generally improved.

Specifically, from the perspective of improving the shedding resistance of the positive electrode, an average molecular weight of the polyvinyl butyral is 3×10⁴ to 20×10⁴, preferably 20×10⁴ or less, more preferably 15×10⁴ or less, further preferably 10×10⁴ or less, particularly preferably 8×10⁴ or less, preferably 3×10⁴ or more, and more preferably 5×10⁴ or more. When the average molecular weight of the polyvinyl butyral is within the aforementioned range, the shedding resistance of the positive electrode can be effectively improved. Furthermore, the cohesion of the positive active material layer and bonding force with the current collector can be generally improved.

Specifically, from the perspective of improving the shedding resistance of the positive electrode, a mass of the polyvinyl butyral is 0.3 parts by mass to 3 parts by mass with respect to 100 parts by mass of the positive electrode material (including the positive active material, a conductive agent, a binder, and an optional auxiliary). The mass of the polyvinyl butyral is preferably 3 parts by mass or less, more preferably 2.5 parts by mass or less, further preferably 2 parts by mass or less, particularly preferably 1.5 parts by mass or less, preferably 0.3 parts by mass or more, and more preferably 0.5 parts by mass or more. When the mass of the polyvinyl butyral is within the aforementioned range, the shedding resistance of the positive electrode can be effectively improved. Furthermore, the cohesion of the positive active material layer and bonding force with the current collector can be generally improved.

Specifically, from the perspective of reducing the initial resistance of the secondary battery, the positive active material layer further includes an auxiliary, and the auxiliary includes at least one of propylene glycol laurate, pentaerythritol oleate, polyethylene glycol oleate, polypropylene glycol oleate, polyoxyethylene glycerol, or polyoxypropylene glycerol. The auxiliary can inhibit excessively large impedance of a film formed by the trinitrile compound on the surface of the positive electrode.

The positive active material is any material capable of reversibly intercalating and de-intercalating lithium ions. For example, as the positive active material for the secondary battery, a composite metal oxide containing lithium and one or two or more selected from the group consisting of cobalt, manganese, and nickel, or a lithium-containing olivine-type phosphate containing one or two or more selected from iron, cobalt, nickel, and manganese is used. The positive active materials may be used alone or in combination of two or more.

As such lithium composite metal oxide, for example, one or more selected from LiCoO₂, LiMn₂O₄, LiNiO₂, LiCo₁₋ₓNiₓO₂(0.01 < x < 1), LiNiₓMn_{y}Co_{z}O₂(x+y+z = 1), a solid solution of Li₂MnO₃ and LiMO₂(M is a transition metal such as Co, Ni, Mn, and Fe), LiNi_{1/2}Mn_{3/2}O₄, LiFePO₄, LiMnPO₄, and LiMn₁₋ₓFeₓPO₄(0.01 < x < 1) is preferably listed, and two or more are more preferably listed. A portion of the composite metal oxides with lithium or the lithium-containing olivine-type phosphates may be substituted with other elements, or a portion of cobalt, nickel, manganese, or iron may be substituted with one or more elements selected from Co, Mn, Ni, Mg, Al, B, Ti, V, Nb, Cu, Zn, Mo, Ca, Sr, W, and Zr, or coated with compounds containing the other elements or carbon materials.

From the perspective of increasing the voltage during charging, a potential of the positive electrode is preferably 4.4 V (vs. Li/Li+) or more, more preferably 4.5 V (vs. Li/Li+) or more, and particularly preferably 4.6 V (vs. Li/Li+) or more.

The type of the conductive material for the positive electrode is not limited, and any known conductive material may be used. Examples of the conductive material for the positive electrode include, but are not limited to, carbon blacks such as acetylene black; carbon materials such as amorphous carbon including needle coke; carbon nanotubes; and graphene, etc. The aforementioned conductive materials for the positive electrode may be used alone or in any combination.

The type of a solvent for forming the positive electrode slurry is not limited, as long as the solvent can dissolve or disperse the positive active material, the conductive material, and the positive electrode binder. Examples of the solvent for forming the positive electrode slurry may include any one of aqueous solvents and organic solvents. Examples of aqueous media may include, but are not limited to, water and mixed media composed of alcohol and water, etc. Examples of organic media may include, but are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran; amides such as N-methyl-pyrrolidone, dimethylformamide, and dimethylacetamide; and non-protonic polar solvents such as hexamethylphosphoramide and dimethyl sulfoxide.

The type of the positive current collector is not particularly limited, and the positive current collector may be any material known to be suitable for use as the positive current collector. Examples of the positive current collector may include, but are not limited to, metal materials such as aluminum, stainless steel, nickel plating, titanium, and tantalum; and carbon materials such as carbon cloth and carbon paper. In some embodiments, the positive current collector is a metal material. In some embodiments, the positive current collector is aluminum.

In order to reduce the electronic contact resistance between the positive current collector and the positive active material layer, the surface of the positive current collector may include a conductive auxiliary or a conductive coating. Examples of the conductive auxiliary may include, but are not limited to, carbon and noble metals such as gold, platinum, and silver. Examples of the conductive coating may include a mixture layer containing an inorganic oxide, a conductive agent, and a binder.

The positive electrode may be fabricated by forming the positive active material layer containing the positive active material and the binder on the positive current collector. The manufacture of the positive electrode using the positive active material may be carried out by conventional methods, i.e., the positive active material, the binder, and the conductive material and a thickening agent adopted according to requirements are subjected to dry mixing to form a sheet, and then the resulting sheet is subjected to pressure bonding onto the positive current collector; or the materials are dissolved or dispersed in a liquid medium to prepare a slurry, and the slurry is applied onto the positive current collector and dried, such that the positive active material layer is formed on the current collector, thereby obtaining the positive electrode.

### II. Electrolyte

An electrolyte used in the secondary battery of this application includes an electrolyte and a solvent for dissolving the electrolyte. In some embodiments, the electrolyte of this application includes lithium difluorophosphate and a trinitrile compound.

Since the polyvinyl butyral is prone to swelling in the carbonate electrolyte system, the applicants found that when the electrolyte contains the lithium difluorophosphate and the trinitrile compound, the swelling is significantly inhibited, the cohesion of the positive active material layer and bonding force with the current collector are improved, such that the shedding resistance of the positive electrode is improved, the initial resistance of the secondary battery is further reduced, and the low-temperature rate characteristic is further improved.

Specifically, from the perspective of improving the low-temperature rate characteristic of the secondary battery, in some embodiments, with respect to 100 parts by mass of the electrolyte, a mass of the lithium difluorophosphate is a parts by mass, a value range of a is from 0.01 to 1.5, and in some embodiments, the value range of a is from 0.01 to 0.08. In some embodiments, the value range of a is from 0.11 to 0.85. In some embodiments, a is 0.01, 0.03, 0.04, 0.05, 0.06, 0.07, 0.08, 0.09, 0.11, 0.13, 0.35, 0.52, 0.67, 0.85, 1.1, 1.5, or a value falling within a range formed by any two of these values. For example, a is 0.01 to 0.05, 0.03 to 0.08, 0.05 to 0.09, 0.03 to 0.13, 0.08 to 0.35, 0.09 to 0.52, 0.13 to 0.67, 0.35 to 0.85, or 0.52 to 1.1, and when a is within the aforementioned ranges, it contributes to further improving the low-temperature rate characteristic.

Specifically, the trinitrile compound is at least one selected from 1,2,3-propanetricarbonitrile, 1,3,5-pentanetricarbonitrile, 1,2,6-hexanetricarbonitrile, 1,3,6-hexanetricarbonitrile, 1,2,4-tris(2-cyanoethoxy)butane, 1,2,3-tris(2-cyanoethoxy)propane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane. One or two or more of the aforementioned trinitrile compound may be used.

Specifically, from the perspective of improving the initial resistance of the secondary battery, in some embodiments, with respect to 100 parts by mass of the electrolyte, a mass of the trinitrile compound is b parts by mass, and a value range of b is from 0.5 to 6. In some embodiments, the value range of b is from 0.5 to 3.5. In some embodiments, the value range of b is from 1.7 to 4.6. In some embodiments, b is 0.5, 0.8, 1.3, 1.7, 2.6, 3.4, 4.6, 5.1, 5.5, 6, or a value falling within a range formed by any two of these values. For example, b is 0.5 to 3.5, 0.8 to 2.6, 1.3 to 4.6, or 1.7 to 3.4, and when b is within the aforementioned ranges, it contributes to further improving the low-temperature rate characteristic. In the case of two or more trinitrile compounds, b represents the total content.

In addition, the electrolyte may further include other additive, and the applicants have also unexpectedly discovered that the other additive may not only inhibit the decomposition of the polyvinyl butyral during charging and discharging, but also further reduce the impedance of a trinitrile film, thereby further improving the shedding resistance of the positive electrode, reducing the initial resistance of the secondary battery, and improving the low-temperature rate characteristic.

The other additive includes at least one of succinonitrile, adiponitrile, ethylene glycol bis(propionitrile) ether, lithium monofluorophosphate, 1,2-bis(difluorophosphoryl)ethane, 1,2-bis(difluorophosphoryl)propane, 1,2-bis(difluorophosphoryl)butane, vinylene carbonate, lithium fluorosulfonate, 1,3-propanesultone, or ethylene sulfate. One or two or more of the aforementioned other additives may be used.

With respect to 100 parts by mass of the electrolyte, a content of other additive is 0.1 parts by mass or more, preferably 0.3 parts by mass or more, more preferably 1.6 parts by mass or more, and further preferably 2.8 parts by mass or more.

In addition, from the perspective of improving the low-temperature rate characteristic, the content of other additive is 6 parts by mass or less, preferably 5.7 parts by mass or less, more preferably 4.2 parts by mass or less, and further preferably 3.1 parts by mass or less.

In some embodiments, a total content of the other additives is c parts by mass, and c is 0.1, 0.3, 0.35, 0.4, 0.45, 0.5, 0.6, 0.7, 0.8, 0.9, 1, 1.5, 1.6, 2, 2.5, 2.9, 3, 3.5, 3.9, 4, 4.5, 5, 5.7, 6, or a value falling within a range formed by any two of these values. For example, c is 0.3 to 5.2, 0.45 to 4.5, 0.6 to 3.7, 0.45 to 3.9, or 0.7 to 4.5, and when c is within the aforementioned ranges, it contributes to further improving the low-temperature rate characteristic. In the case of two or more other additives, c represents the total content.

The lithium salt used in the electrolyte of this application includes lithium hexafluorophosphate. Based on the total mass of the electrolyte, a content of the lithium hexafluorophosphate ranges from 9 mass% to 15 mass%, preferably from 9 mass% to 13 mass%, and more preferably from 9 mass% to 12 mass%. By setting the content within the aforementioned range, improvement of the resistance characteristic and improvement of the low-temperature characteristic can be better balanced.

The electrolyte of this application may further include any non-aqueous solvent known in the prior art suitable for use as a solvent of the electrolyte. For example, the non-aqueous solvent may be cyclic carbonate, chain carbonate, cyclic carboxylic ester, chain carboxylic ester, cyclic ether, chain ether, phosphorus-containing organic solvent, and sulfur-containing organic solvent. The chain carboxylic ester is preferred, such as ethyl acetate, ethyl fluoroacetate, ethyl propionate, and propyl propionate.

In some embodiments, the electrolyte is not particularly limited, and materials that are well known as electrolytes may be used arbitrarily. The mass of the electrolyte is not particularly limited, as long as it does not impair the effect of this application.

### III. Negative Electrode

The negative electrode includes a negative current collector and a negative active material layer disposed on the surface of the negative current collector. The negative active material layer includes a negative active material. In some embodiments, the rechargeable capacity of the negative active material is greater than the discharge capacity of the positive active material to prevent unintentional precipitation of lithium metal on the negative electrode during charging.

As the current collector for maintaining the negative active material, any well-known current collector may be used. Examples of the negative current collector include, but are not limited to, metal materials such as copper, nickel, stainless steel, and nickel-plated steel. In some embodiments, the negative current collector is copper.

There is no particular limitation on the negative active material, as long as it is capable of reversibly occluding and releasing lithium ions. Examples of the negative active material may include, but are not limited to, carbon materials such as natural graphite, and artificial graphite; metals such as silicon (Si), and stannum (Sn); or oxides of metal elements such as Si, and Sn. The negative active materials may be used alone or in combination.

The negative active material layer may further include a negative electrode binder. The negative electrode binder can improve the binding among negative active material particles and the binding between the negative active material and the negative current collector. There is no special limitation on the type of negative electrode binder, as long as it is a material that is stable for the electrolyte or the solvent used in the manufacture of the electrode. In some embodiments, the negative electrode binder includes a resin binder. Examples of the resin binder include, but are not limited to, fluororesin, polyacrylonitrile (PAN), polyimide resin, acrylic resin, polyolefin resin, and the like. When an aqueous solvent is used to prepare a negative electrode mixture slurry, the negative electrode binder includes, but is not limited to, carboxymethylcellulose (CMC) or a salt thereof, styrene-butadiene rubber (SBR), polyacrylic acid (PAA) or a salt thereof, polyvinyl alcohol, and the like.

The negative electrode may be prepared by the following method: the negative electrode mixture slurry containing the negative active material, the resin binder, and the like is applied onto the negative current collector, dried, and then calendared to form negative active material layers on both surfaces of the negative current collector, thereby obtaining the negative electrode.

### IV. Separator

A separator is typically disposed between the positive electrode and the negative electrode in order to prevent short circuits. In this case, the electrolyte of this application is typically used by penetrating the separator.

There is no special limitation on the material and shape of the separator, as long as is does not significantly impair the effect of this application. The separator may be a resin, glass fiber, inorganic compound, etc. formed from a material for stabilizing the electrolyte of this application. In some embodiments, the separator includes a porous sheet with excellent liquid retention, a material in a nonwoven-like form, and the like. Examples of materials of the resin or glass fiber separator may include, but are not limited to, polyolefin, aromatic polyamide, polyethersulfone, and the like. In some embodiments, the polyolefin is polyethylene or polypropylene. In some embodiments, the polyolefin is polypropylene. The materials of the aforementioned separator may be used alone or in any combination.

The separator may also be a material formed by laminating the aforementioned materials, examples of which include, but are not limited to, a three-layer separator formed by laminating polypropylene, polyethylene and polypropylene in order, and the like.

Examples of the inorganic compounds may include, but are not limited to, oxides such as alumina, and silica, nitrides such as aluminum nitride, and silicon nitride, and sulfates (e.g., barium sulfate, and calcium sulfate). The inorganic compound form may include, but is not limited to, granular or fibrous.

The form of the separator may be in the form of a film, examples of which include, but are not limited to, nonwoven fabrics, woven fabrics, microporous membranes, and the like. In the form of the film, the separator has a pore size of 0.01 µm to 1 µm and a thickness of 5 µm to 50 µm. In addition to the aforementioned independent film-like separator, the following separator may also be used: a separator formed by forming a composite porous layer containing the aforementioned inorganic compound particles on the surface of the positive electrode and/or the negative electrode by using a resin-based binder, e.g., a separator formed by using resin as a binder to cause 90% of alumina particles having a particle size of less than 1 µm to form porous layers on both sides of the positive electrode.

The thickness of the separator is arbitrary. In some embodiments, the thickness of the separator is greater than 1 µm, greater than 5 µm, or greater than 8 µm. In some embodiments, the thickness of the separator is less than 50 µm, less than 40 µm, or less than 30 µm. When the thickness of the separator is within the aforementioned range, the insulativity and mechanical strength can be ensured, and the rate characteristic and energy density of the secondary battery can also be ensured.

This application further provides an electronic device, including the secondary battery described according to this application.

The use of the secondary battery of this application is not specifically limited and the secondary battery may be used in any electronic device known in the prior art. In some embodiments, the secondary battery of this application may be used in, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, a power tool, a flash light, a camera, a large household storage battery, a lithium-ion capacitor, and the like.

The preparation of the secondary battery is illustrated in combination with specific embodiments below. A person skilled in the art should understand that a preparation method described in this application is only an example, and any other suitable preparation methods are within the scope of this application.

### Preparation of Secondary Battery

Positive active materials lithium cobalt oxide (97 parts by mass) and acetylene black (1.5 parts by mass) are mixed, added to a solution obtained by pre-dissolving polyvinyl butyral (1.5 parts by mass) shown in Table 1-1 in 1-methyl-2-pyrrolidinone, and mixed to prepare a positive electrode mixture paste. The positive electrode mixture paste is applied to aluminum foil, dried, pressed, and cut to a specified size to prepare a positive electrode. If the auxiliary (as shown in Table 1-2) is added, the content of the polyvinyl butyral is adjusted to 1.3 parts by mass, and the auxiliary is 0.2 parts by mass.

Negative active materials artificial graphite and silicon-carbon (a mass ratio of 97: 3, totaling 96 parts by mass) are mixed with styrene-butadiene rubber (2 parts by mass) and added to a solution obtained by dissolving lithium carboxymethylcellulose (2 parts by mass) in deionized water, followed by mixing to prepare a negative electrode mixture paste. The negative electrode mixture paste is applied to copper foil, dried, pressed, and cut to a specified size to prepare a negative electrode.

A 5µm polyethylene porous membrane is used as a separator.

The positive electrode and the negative electrode prepared as above are each connected to a conducting wire. Lamination and winding are performed via the aforementioned separator. Furthermore, LiPF₆ as a supporting electrolyte is separately dissolved in a solution containing ethylene carbonate, propylene carbonate, propyl propionate, ethyl propionate, lithium difluorophosphate, a trinitrile compound, and other additive. Based on 100 parts by mass of the total mass of an electrolyte, the mass contents and components of the lithium difluorophosphate, the trinitrile compound and the other additive are shown in Tables 1-3, 2, 3 and 4. A mass content of LiPF₆ is 14%, and the rest are ethylene carbonate, propylene carbonate, propyl propionate and ethyl propionate (a mass ratio of 0.8: 1: 2: 1).

Subsequently, the winding body and 3.2 g of the electrolyte are housed in an aluminum laminate housing. The opening portion of the housing is heat-sealed, and a secondary battery is prepared through formation, capacity adjustment, and other steps. The secondary battery is a pouch-type secondary battery with a width of 35 mm, a height of 48 mm, and a thickness of 5 mm.

**Table 1**

| Table 1-1 Polyvinyl butyral (PVB) | |
|---|---|
| **Serial number** | **Characteristic** |
| PVB-1 | A particle shape, an average particle size of 40 microns, a degree of acetalation of 46 mol%, and an average molecular weight of 5×10⁴ |
| PVB-2 | A particle shape, an average particle size of 60 microns, a degree of acetalation of 40 mol%, and an average molecular weight of 6.2×10⁴ |
| PVB-3 | A particle shape, an average particle size of 80 microns, a degree of acetalation of 55 mol%, and an average molecular weight of 7.9×10⁴ |

**Table 1-2 Auxiliary**

| **Serial number** | **Name** |
|---|---|
| Auxiliary 1 | Propylene glycol laurate |
| Auxiliary 2 | Pentaerythritol oleate |
| Auxiliary 3 | Polyethylene glycol oleate |
| Auxiliary 4 | Polyoxypropylene glycerol |
| Auxiliary 5 | Polypropylene glycol oleate |
| Auxiliary 6 | Polyoxyethylene glycerol |

**Table 1-3 Electrolyte Component Abbreviation**

| **Code** | **Name** | **Code** | **Name** |
|---|---|---|---|
| N1 | 1,3,6-Hexanetricarbonitrile | C1 | Succinonitrile |
| N2 | 1,3,5-pentanetricarbonitrile | C2 | Adiponitrile |
| N3 | 1,2,6-hexanetricarbonitrile | C3 | Ethylene glycol bis(propionitrile) ether |
| N4 | 1,2,3-tris(2-cyanoethoxy)propane | C4 | 1,2-bis(difluorophosphoryl)e thane |
| N5 | 1,2,4-tris(2-cyanoethoxy)butane | C5 | 1,2-bis(difluorophosphoryl)p ropane |
| N6 | 1,2,5-tris(cyanoethoxy)pentane | C6 | 1,2-bis(difluorophosphoryl)b utane |
| C7 | Vinylene carbonate | C9 | 1,3-Propanesultone |
| C8 | Lithium fluorosulfonate | C10 | Ethylene sulfate |

### Test Method

### Shedding Resistance of Positive Electrode

After the prepared secondary battery is filled with the electrolyte, the secondary battery is allowed to stand at a temperature of 25 °C for 6 hours. Next, a battery unit is charged by the constant current method at a temperature of 25 °C and 0.1 C to a battery unit voltage of 4.6 V, and then aged at a temperature of 60 °C for 12 hours. Then, the battery unit is disassembled in the state of charging to 4.6 V at 0.2 C and discharging to 3.0 V at 0.2 C, and the positive electrode is removed. The removed positive electrode is cleaned with diethyl carbonate, and the surface of the positive electrode is visually observed and evaluated by the following benchmarks. The fewer cracks and peeling on the surface of the positive electrode mean that the more the positive active material, etc. can be suppressed from falling off the current collector, and the better the shedding resistance.
A: Cracks and peeling are observed in more than 0% and less than 3% the area of the entire surface of the positive electrode.
B: Cracks and peeling are observed in more than 3% and less than 5% the area of the entire surface of the positive electrode.
C: Cracks and peeling are observed in more than 5% and less than 10% the area of the entire surface of the positive electrode.
D: Cracks and peeling are observed in more than 10% the area of the entire surface of the positive electrode.

### Initial Resistance Characteristic of Secondary Battery

After the prepared secondary battery is charged at a constant current of 0.2 C until the battery voltage becomes 4.6 V, the battery is charged at a constant voltage of 4.6 V until the charging current becomes 0.02 C. Next, after the battery is discharged at a constant current of 0.2 C until the battery voltage becomes 3.87 V (State of charge (SOC): 50%), the voltage change after discharging the battery for 30 seconds at each of the conditions of 0.2 C, 0.5 C, 1.0 C, 2.0 C, 2.5 C, and 3.0 C is measured. Each discharging current and the measured voltage change are plotted (horizontal axis: the value of the discharging current, vertical axis: the value of the voltage change), and the slope is taken as a resistance value (Ω). The calculated resistance value is evaluated using the following benchmarks. The lower the resistance value, the lower the internal resistance of the secondary battery and the lower the battery resistance.
A: The resistance value is less than 4 Ω.
B: The resistance value is more than 4 Ω and less than 5 Ω.
C: The resistance value is more than 5 Ω and less than 6 Ω.
D: The resistance value is more than 6 Ω.

### Low-Temperature Rate Characteristic of Secondary Battery

After the prepared secondary battery is allowed to stand for 24 hours in an environment of 25 °C, the secondary battery is charged at a constant current of 0.1 C for 5 hours in the environment of 25 °C, and a voltage V0 after charging is measured. Then, a discharge operation is performed at a discharge rate of 0.5 C in an environment of -30°C, and a voltage V1 is measured 15 seconds after the start of the discharge. Further, a voltage change ΔV, expressed as ΔV = V0-V1, is derived and determined according to the following criteria. The smaller the value of the voltage change ΔV, the better the low-temperature rate characteristic.
A: The voltage change ΔV is less than 0.3 V.
B: The voltage change ΔV is more than 0.3 V and less than 0.5 V.
C: The voltage change ΔV is more than 0.5 V and less than 0.8 V.
D: The voltage change ΔV is more than 0.8 V and less than 1.0 V.
E: The voltage change ΔV is more than 1.0 V.

### Test Result

**Table 2**

| | **Binder** | **a** | **Trinitrile compound (b)** | **Shedding resistance** | **Initial resistance** | **Low-temperature rate** |
|---|---|---|---|---|---|---|
| **Embodim ent 1-1** | PVB-1 | 0.01 | N1(0.5) | B | B | B |
| **Embodim ent 1-2** | PVB-2 | 0.03 | N2(6) | B | B | B |
| **Embodim ent 1-3** | PVB-3 | 0.05 | N1(1.2) | B | B | B |
| **Embodim ent 1-4** | PVB-3 | 0.06 | N4(1.2) | A | B | B |
| **Embodim ent 1-5** | PVB-2 | 0.07 | N5(1.2) | A | B | B |
| **Embodim ent 1-6** | PVB-2 | 0.08 | N6(1.2) | A | B | B |
| **Embodim ent 1-7** | PVB-2 | 0.09 | N1(1.2)+N 2(0.8) | A | B | B |
| **Embodim ent 1-8** | PVB-2 | 0.11 | N1(1.2)+N 3(0.5) | A | B | B |
| **Embodim ent 1-9** | PVB-2 | 0.13 | N1(1.2)+N 4(0.8) | A | A | B |
| **Embodim ent 1-10** | PVB-2 | 0.35 | N2(1.2)+N 4(0.8) | A | A | B |
| **Embodim ent 1-11** | PVB-2 | 0.52 | N2(1.2)+N 5(0.8) | A | A | B |
| **Embodim ent 1-12** | PVB-2 | 0.67 | N1(1.2)+N 4(1.4) | A | A | B |
| **Embodim ent 1-13** | PVB-2 | 0.85 | N1(1.2)+N 4(2.3) | A | A | B |
| **Embodim ent 1-14** | PVB-2 | 1.1 | N1(2.1)+N 4(2.5) | A | A | B |
| **Embodim ent 1-15** | PVB-2 | 1.5 | N3(1.7) | A | B | B |
| Comparati ve Embodime nt 1-1 | PVB-2 | 0 | 0 | D | D | E |
| Comparati ve Embodime nt 1-2 | PVB-2 | 0.03 | 0 | D | D | E |
| Comparati ve Embodime nt 1-3 | PVB-2 | 0 | N1(1.2) | D | D | E |
| Comparati ve Embodime nt 1-4 | PVDF | 0 | N1(1.2) | D | D | E |

**Table 3**

| | **Binder** | **Auxiliary** | **a** | **Trinitrile compou nd (b)** | **Shedding resistance** | **Initial resistance** | **Low-tempera ture rate** |
|---|---|---|---|---|---|---|---|
| Embodi ment 1-3 | PVB-3 | None | 0.05 | N1(1.2) | B | B | B |
| Embodi ment 1-4 | PVB-3 | None | 0.06 | N4(1.2) | A | B | B |
| Embodi ment 1-7 | PVB-2 | None | 0.09 | N1(1.2)+ N2(0.8) | A | B | B |
| Embodi ment 1-9 | PVB-2 | None | 0.13 | N1(1.2)+ N4(0.8) | A | A | B |
| **Embodi ment 2-1** | PVB-2 | Auxiliary 1 | 0.05 | N1(1.2) | B | A | B |
| **Embodi ment 2-2** | PVB-2 | Auxiliary 2 | 0.06 | N4(1.2) | A | A | B |
| **Embodi ment 2-3** | PVB-2 | Auxiliary 3 | 0.09 | N1(1.2)+ N2(0.8) | A | A | B |
| **Embodi ment 2-4** | PVB-2 | Auxiliary 4 | 0.13 | N1(1.2)+ N4(0.8) | A | A | A |
| **Embodi ment 2-5** | PVB-2 | Auxiliary 5 | 0.13 | N1(1.2)+ N4(0.8) | A | A | A |
| **Embodi ment 2-6** | PVB-2 | Auxiliary 6 | 0.13 | N1(1.2)+ N4(0.8) | A | A | A |

**Table 4**

| | **Binder** | **Auxiliary** | **a** | **Trinitrile compound (b)** | **Other additive** | **Shedding resistance** | **Initial resistance** | **Low-temperature rate** |
|---|---|---|---|---|---|---|---|---|
| **Embodi ment 1-3** | PVB-3 | None | 0.05 | N1(1.2) | None | B | B | B |
| **Embodi ment 1-4** | PVB-3 | None | 0.06 | N4(1.2) | None | A | B | B |
| **Embodi ment 1-7** | PVB-2 | None | 0.09 | N1(1.2) +N2(0.8 ) | None | A | B | B |
| **Embodi ment 1-9** | PVB-2 | None | 0.13 | N1(1.2) +N4(0.8 ) | None | A | A | B |
| **Embodi ment 2-1** | PVB-2 | Auxiliary 1 | 0.05 | N1(1.2) | None | B | A | B |
| **Embod iment 2-2** | PVB-2 | Auxiliary 2 | 0.06 | N4(1.2) | None | A | A | B |
| **Embodi ment 2-3** | PVB-2 | Auxiliar y 3 | 0.09 | N1(1.2) +N2(0.8 ) | None | A | A | B |
| **Embodi ment 2-4** | PVB-2 | Auxiliar y 4 | 0.13 | N1(1.2) +N4(0.8 ) | None | A | A | A |
| **Embodi ment 3-1** | PVB-2 | None | 0.05 | N1(1.2) | C1(3.1) | B | B | A |
| **Embodi ment 3-2** | PVB-2 | None | 0.06 | N4(1.2) | C2(2.4) | A | B | A |
| **Embodi ment 3-3** | PVB-2 | None | 0.09 | N1(1.2) +N2(0.8 ) | C3(1.2) | A | B | A |
| **Embodi ment 3-4** | PVB-2 | None | 0.13 | N1(1.2) +N4(0.8 ) | C4(0.6) | A | A | A |
| **Embodi ment 3-5** | PVB-2 | Auxiliary 1 | 0.05 | N1(1.2) | C5(0.3) | B | A | A |
| **Embodi ment 3-6** | PVB-2 | Auxiliary 2 | 0.06 | N4(1.2) | C6(0.8) | A | A | A |
| **Embodi ment 3-7** | PVB-2 | Auxiliary 3 | 0.09 | N1(1.2) +N2(0.8 ) | C7(0.7) | A | A | A |
| **Embodi ment 3-8** | PVB-2 | Auxiliary 4 | 0.13 | N1(1.2) +N4(0.8 ) | C8(0.3) | A | A | A |
| **Embodi ment 3-9** | PVB-2 | None | 0.05 | N1(1.2) | C9(2.2) | B | B | A |
| **Embodi ment 3-10** | PVB-2 | None | 0.05 | N1(1.2) | C10(0.3 ) | B | B | A |
| **Embodi ment 3-11** | PVB-2 | None | 0.05 | N1(1.2) | C1(1.7) +C2(1.6 ) | B | A | A |
| **Embodi ment 3-12** | PVB-2 | None | 0.05 | N2(1.2) | C1(1.3) +C3(0.6 ) | B | A | A |
| **Embodi ment 3-13** | PVB-2 | Auxiliary 1 | 0.05 | N3(1.2) | C1(1.3) +C4(0.5 ) | B | A | A |
| **Embodi ment 3-14** | PVB-2 | Auxiliary 2 | 0.05 | N1(1.2) | C1(1.3) +C7(0.2 ) | B | A | A |
| **Embodi ment 3-15** | PVB-2 | None | 0.05 | N1(1.2) | C1(1.3) +C8(0.4 ) | B | A | A |
| **Embodi ment 3-16** | PVB-2 | None | 0.06 | N4(1.2) | C1(1.7) +C2(1.6 ) | A | A | A |
| **Embodi ment 3-17** | PVB-2 | None | 0.06 | N5(1.2) | C2(1.8) +C3(0.4 ) | A | A | A |
| **Embodi ment 3-18** | PVB-2 | None | 0.06 | N6(1.2) | C3(1.5) +C4(0.5 ) | A | A | A |
| **Embodi ment 3-19** | PVB-2 | Auxiliary 1 | 0.06 | N4(1.2) | C9(1.3) +C7(0.2 ) | A | A | A |
| **Embodi ment 3-20** | PVB-2 | Auxiliary 2 | 0.06 | N4(1.2) | C1(1.3) +C10(0. 4) | A | A | A |

In Tables 2 to 4, with respect to 100 parts by mass of the electrolyte, a represents the parts by mass of the lithium difluorophosphate, b represents the parts by mass of the trinitrile compound, and the numbers in parentheses indicate the parts by mass of the corresponding materials.

When the positive active material layer includes the positive active material and the polyvinyl butyral, and the electrolyte includes the lithium difluorophosphate and the trinitrile compound, the shedding resistance of the positive electrode is improved, the initial resistance of the secondary battery is further reduced, and the low-temperature rate characteristic is further improved. In particular, when the electrolyte includes at least two of the aforementioned trinitrile compounds, the initial resistance of the secondary battery can be further reduced by cooperation with the lithium difluorophosphate.

Particularly, when the positive active material layer further includes an auxiliary such as propylene glycol laurate, pentaerythritol oleate, polyethylene glycol oleate, or polyoxypropylene glycerol, it can inhibit excessively large impedance of the film of the trinitrile compound formed on the surface of the positive electrode and further reduce the initial resistance of the secondary battery and improve the low-temperature rate characteristic.

Particularly, when the electrolyte further includes other additive, the applicants have also unexpectedly discovered that the other additive not only inhibits the decomposition of the polyvinyl butyral during charging and discharging, but also further reduces the impedance of a trinitrile film, thereby further improving the shedding resistance of the positive electrode, reducing the initial resistance of the secondary battery, and improving the low-temperature rate characteristic. In particular, when the electrolyte includes at least two of the aforementioned other additives, the initial resistance and the low-temperature rate of the secondary battery are further improved.

Throughout the description, references to "embodiments," "part of embodiments," "an embodiment," "another example," "an example," "a specific example," or "a partial example" are meant to imply that at least one of the embodiments or examples in this application includes a particular feature, structure, material, or characteristic described in that embodiment or example. Therefore, the descriptions appearing throughout the specification, such as "in some embodiments," "in embodiments," "in one embodiment," "in another example," "in an example," "in a particular example," or "examples," are not necessarily references to the same embodiments or examples in this application. In addition, the particular features, structures, materials, or characteristics in this application may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. A secondary battery, **characterized in that** the secondary battery comprises: a positive electrode, a negative electrode, and an electrolyte; wherein the positive electrode comprises a positive current collector and a positive active material layer formed on the positive current collector, the positive active material layer comprises a positive active material and polyvinyl butyral, and the electrolyte comprises lithium difluorophosphate and a trinitrile compound.

2. The secondary battery according to claim 1, **characterized in that** the polyvinyl butyral has a particle shape, and an average particle size of 20 microns to 100 microns.

3. The secondary battery according to claim 1 or 2, **characterized in that** the polyvinyl butyral has a degree of acetalation of 30 mol% to 60 mol%.

4. The secondary battery according to any one of claims 1 to 3, **characterized in that** the polyvinyl butyral has an average molecular weight of 3×10⁴ to 20×10⁴.

5. The secondary battery according to any one of claims 1 to 4, **characterized in that** the positive active material layer further comprises an auxiliary; and the auxiliary comprises at least one of propylene glycol laurate, pentaerythritol oleate, polyethylene glycol oleate, polypropylene glycol oleate, polyoxyethylene glycerol ether, or polyoxypropylene glycerol ether.

6. The secondary battery according to any one of claims 1 to 5, **characterized in that** the trinitrile compound is at least one selected from 1,2,3-propanetricarbonitrile, 1,3,5-pentanetricarbonitrile, 1,2,6-hexanetricarbonitrile, 1,3,6-hexanetricarbonitrile, 1,2,4-tris(2-cyanoethoxy)butane, 1,2,3-tris(2-cyanoethoxy)propane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

7. The secondary battery according to any one of claims 1 to 6, **characterized in that** with respect to 100 parts by mass of the electrolyte, the lithium difluorophosphate is 0.01 parts by mass to 1.5 parts by mass.

8. The secondary battery according to any one of claims 1 to 7, **characterized in that** with respect to 100 parts by mass of the electrolyte, the trinitrile compound is 0.5 parts by mass to 6 parts by mass.

9. The secondary battery according to any one of claims 1 to 8, **characterized in that** with respect to 100 parts by mass of the electrolyte, the lithium difluorophosphate is 0.01 parts by mass to 0.08 parts by mass.

10. The secondary battery according to any one of claims 1 to 9, **characterized in that** with respect to 100 parts by mass of the electrolyte, the trinitrile compound is 0.5 parts by mass to 3.5 parts by mass.

11. The secondary battery according to any one of claims 1 to 10, **characterized in that** with respect to 100 parts by mass of the electrolyte, the lithium difluorophosphate is 0.11 parts by mass to 0.85 parts by mass.

12. The secondary battery according to any one of claims 1 to 11, **characterized in that** with respect to 100 parts by mass of the electrolyte, the trinitrile compound is 1.7 parts by mass to 4.6 parts by mass.

13. The secondary battery according to any one of claims 1 to 12, **characterized in that** the electrolyte further comprises an other additive; and the other additive comprises at least one of succinonitrile, adiponitrile, ethylene glycol bis(propionitrile) ether, lithium monofluorophosphate, 1,2-bis(difluorophosphoryl)ethane, 1,2-bis(difluorophosphoryl)propane, 1,2-bis(difluorophosphoryl)butane, vinylene carbonate, lithium fluorosulfonate, 1,3-propanesultone, or ethylene sulfate.

14. The secondary battery according to claim 13, **characterized in that** with respect to 100 parts by mass of the electrolyte, the other additive is 0.1 parts by mass to 6 parts by mass.

15. An electronic device, **characterized in that** the electronic device comprises the secondary battery according to any one of claims 1 to 14.
